Europäisches Patentamt

European Patent Office

Office européen des brevets

(11) Numéro de publication: **0 343 020**
**A1**

(12) **DEMANDE DE BREVET EUROPEEN**

(21) Numéro de dépôt: **89400986.9**

(22) Date de dépôt: **11.04.89**

(51) Int. Cl.⁴: **F 16 K 17/168**
F 16 K 17/04, B 64 D 13/04

(30) Priorité: **18.04.88 FR 8805068**

(43) Date de publication de la demande:
**23.11.89  Bulletin  89/47**

(84) Etats contractants désignés: **DE FR GB IT**

(71) Demandeur: **ABG-SEMCA**
**408, avenue des Etats-Unis**
**F-31000 Toulouse (FR)**

(72) Inventeur: **Signoret, Jacques**
**THOMSON - CSF SCPI - CEDEX 67**
**F-92045 Paris la Défense  (FR)**

**Fraisse, Jacques**
**THOMSON - CSF SCPI - CEDEX 67**
**F-92045 Paris la Défense  (FR)**

**Baroux, Bruno**
**THOMSON - CSF SCPI - CEDEX 67**
**F-92045 Paris la Défense  (FR)**

**Carla, François**
**THOMSON - CSF SCPI - CEDEX 67**
**F-92045 Paris la Défense  (FR)**

(74) Mandataire: **Ruellan-Lemonnier, Brigitte et al**
**THOMSON-CSF SCPI**
**F-92045 PARIS LA DEFENSE CEDEX 67  (FR)**

(54) Vanne à ouverture automatique et aéronef comportant une telle vanne.

(57) L'invention se rapporte principalement à une vanne à ouverture automatique et un aéronef comportant une telle vanne.

L'invention concerne une vanne (29) permettant la régulation des pressions ou des débits. De plus, la vanne (29) selon la présente invention est susceptible de s'ouvrir de façon autonome sous l'action d'une différence de pression dépassant un seuil prédéterminé. Ainsi, elle permet un équilibrage rapide des pressions au cas où la différence de pression dépasse un seuil, par exemple susceptible de mettre en danger une installation.

Le dispositif selon la présente invention s'applique à tout dispositif de régulation de pression et/ou de débit entre une enceinte et l'extérieur ou entre deux enceintes comportant un dispositif d'équilibrage de sécurité.

L'invention s'applique notamment à la construction aéronautique, à la construction de raffineries de pétrole, de dispositifs de distribution de fluide et de réacteurs chimiques.

FIG. 6

EP 0 343 020 A1

Description

## VANNE A OUVERTURE AUTOMATIQUE ET AERONEF COMPORTANT UNE TELLE VANNE.

L'invention se rapporte principalement à une vanne à ouverture automatique et un aéronef comportant une telle vanne.

On connaît des vannes, qui permettent, sur commande, de laisser passer un débit désiré d'un fluide entre par exemple deux enceintes au sein desquelles règnent des pressions différentes. Les vannes de type connu permettent de réaliser des régulations de débits ou de pressions. Pour permettre une régulation stable les vannes sont prévues pour fonctionner dans un domaine de débit déterminé. Ainsi, il n'est pas possible, sur commande, par exemple en cas d'incident, d'obtenir, par une ouverture rapide et complète de la vanne l'équilibrage des pressions. De plus, les vannes de type connu n'agissent que sur commande extérieure. Ainsi, la panne du dispositif de commande extérieure rend complètement inefficace la vanne.

Ainsi, dans le cas d'utilisations les plus courantes on ne dispose pas de moyens de sécurité pour effectuer un équilibrage de pressions. Dans les technologies de pointe comme par exemple en aéronautique, on utilise des clapets prévus pour s'ouvrir si la différence de pression sur leurs deux faces excède un seuil prédéterminé.

Mais, il s'avère que le fait de disposer sur une paroi séparant, par exemple deux enceintes ou, une enceinte de l'extérieur, d'un clapet et d'une vanne pose des problèmes importants. D'une part, il faut disposer de la place nécessaire à la vanne et au clapet. Cela n'est pas toujours le cas notamment si les vannes et clapets doivent être disposés par exemple sur une tuyauterie reliant des tubes de réacteurs chimiques, ou des points d'une colonne de distillation, par exemple de pétrole.

D'autre part, le fait de réaliser une ouverture nécessaire au passage de la vanne et du clapet fragilise la paroi. Cette fragilisation pourra être partiellement compensée par une structure par exemple métallique mise en place autour de la vanne et du clapet. Mais cette structure métallique est chère et lourde. Le poids supplémentaire est particulièrement grave dans le cas de réalisations d'aéronefs.

L'invention consiste en une vanne comportant des moyens permettant son ouverture autonome automatique dans le cas où la différence de pression sur les deux faces dépasse un seuil. Ces moyens empêchent l'ouverture de la vanne tant que le seuil de la différence de pression n'est pas atteint. L'ouverture s'effectue automatiquement quand les forces résultant de la différence de pression ne sont plus équilibrées par les forces maintenant soit fermée soit partiellement ouverte la vanne. L'ouverture de la vanne tant que la différence de pression n'a pas atteint le seuil désiré est empêchée par exemple par le poids de la vanne, par des ressorts, par des aimants et/ou par des électro-aimants. L'ouverture complète de la vanne se fait soit par translation soit par rotation, avantageusement autour d'un axe disposé non symétriquement par rapport à l'axe de symétrie de la vanne.

Dans une variante de réalisation, l'ouverture de la vanne n'est pas complète, mais, dans tous les cas elle est suffisante pour réaliser un équilibrage rapide des pressions.

Le dispositif selon la présente invention permet de n'effectuer qu'un trou unique dans la paroi qui le supporte. Ainsi on minimise la fragilisation de la paroi, on diminue le poids par la suppression d'une structure entourant l'ouverture tout en diminuant le coût de fabrication. De plus, dans les cas où la surface disponible est limitée le dispositif selon la présente invention permet de réaliser une ouverture unique plus grande, à la place de deux ouvertures destinées l'une à la vanne, et l'autre au clapet. Ainsi, avec le dispositif selon la présente invention il est possible de réaliser des vannes ayant des surfaces d'échange plus grandes et par là même d'améliorer le fonctionnement et la sécurité du dispositif.

L'invention concerne aussi un aéronef comportant une vanne selon la présente invention.

L'invention concerne aussi un aéronef caractérisé par le fait que cette vanne est une vanne de ventilation destinée à équilibrer les pressions extérieures et intérieures lorsque l'aéronef est posé au sol.

L'invention a aussi pour objet un aéronef caractérisé par le fait que sous l'influence d'une pression extérieure trop importante, la vanne s'ouvre vers l'intérieur de l'aéronef.

L'invention sera mieux comprise au moyen de la description ci-après et des figures annexées données comme des exemples non limitatifs parmi lesquelles :

- la figure 1 est un schéma d'un premier exemple de réalisation du dispositif selon la présente invention ;
- la figure 2 est un schéma du dispositif de la figure 1 dans la position ouverte ;
- la figure 3 est un schéma du dispositif de la figure 1 verrouillé en position fermée ;
- la figure 4 est un schéma d'un premier exemple de réalisation d'un détail de la figure 1.
- la figure 5 est un schéma d'un second exemple de réalisation d'un détail de réalisation du dispositif de la figure 1 ;
- la figure 6 est une vue en perspective du dispositif selon la présente invention ;
- la figure 7 est un schéma d'un aéronef selon la présente invention.
- la figure 8 est un schéma d'une variante de réalisation du dispositif selon l'invention.
- la figure 9 est un schéma du dispositif de la figure 1 dont l'ouverture a été provoquée par une différence de pression dépassant un seuil prédéterminé.

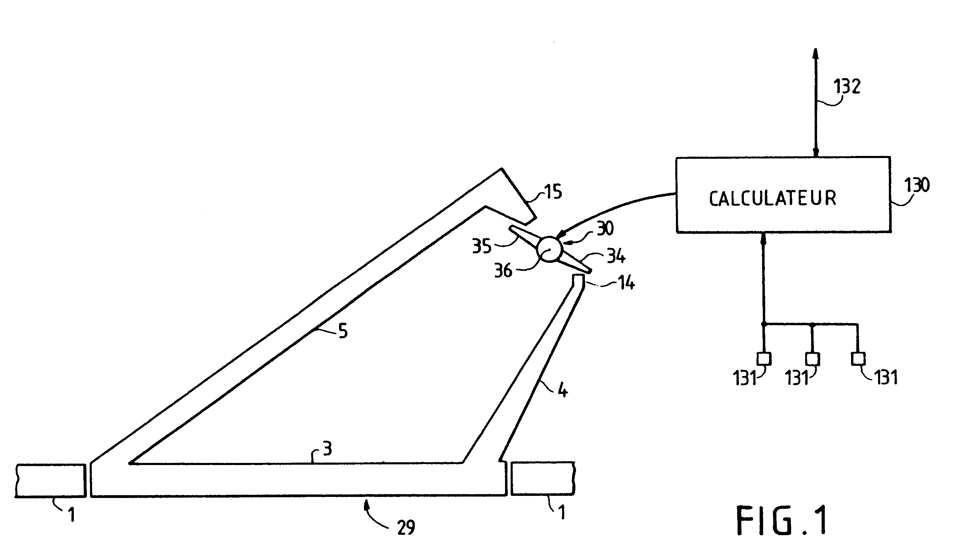

Sur les figures 1 à 9 on a utilisé les mêmes références pour désigner les mêmes éléments.

Sur la figure 1, on peut voir un premier exemple de réalisation d'une vanne à ouverture automatique selon la présente invention. La vanne 29 comporte un volet 3 qui en position fermée rend étanche la paroi 1. La vanne 29 selon la présente invention comporte des moyens 30 permettant l'ouverture partielle ou totale, sur commande, de la vanne. L'ouverture de la vanne permet de diminuer la différence de pression régnant sur les deux faces de la paroi 1. Dans l'exemple illustré sur les figures, la vanne 29 tourne autour d'un axe 36. La rotation du volet 3 de la vanne 29 découvre un espace permettant l'échange de fluide. Pour une même différence de pression la découverte d'une surface plus importante permet une augmentation de débit.

L'ouverture du volet 3 de la vanne 29 est obtenue par exemple par une translation du volet 3 soit parallèlement par perpendiculairement à la paroi 1. Avantageusement, le volet 3 subit une rotation autour de l'axe 36. La rotation autour de l'axe 36 est par exemple obtenue par l'entraînement de deux montants 4 et 5 résultant par exemple de la traction d'un bras 35 sur l'extrémité 15 du montant 5 ou de la poussée d'un bras 34 sur l'extrémité 14 du montant 4.

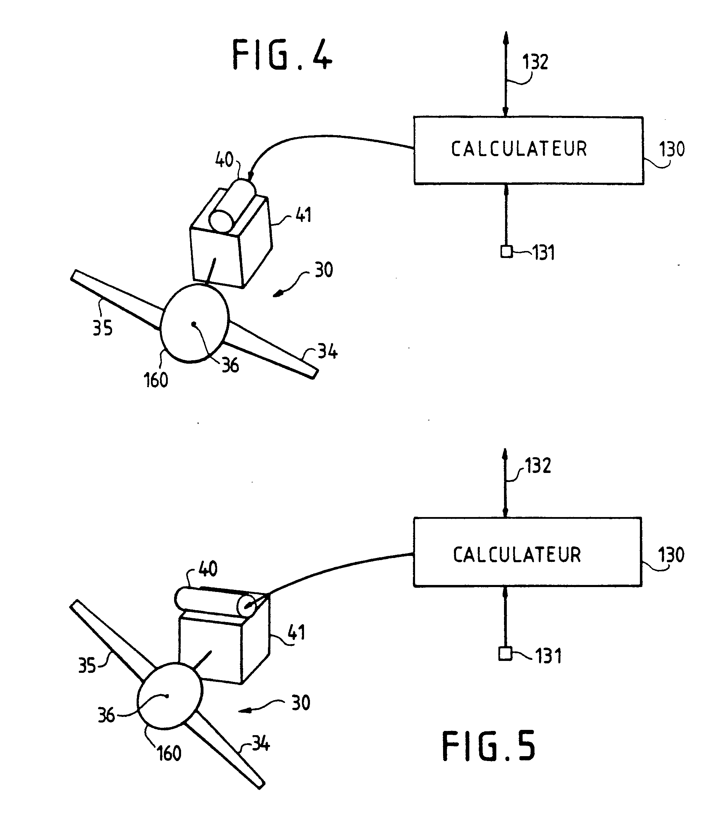

Avantageusement, les bras 34 et/ou 35 font partie d'un dispositif d'entraînement 30 tel qu'illustré sur la figure 4 ou 5. Dans l'exemple de réalisation illustré sur la figure 1, le bras 35 tire sur l'extrémité 15 du bras 5. Le bras 5 a par exemple un angle compris entre 80 et 130° par rapport au bras 5.

Dans l'exemple de réalisation illustré sur la figure 1, le bras 34 appuie sur l'extrémité 14 du montant 4 placé sensiblement dans le prolongement dudit montant.

La vanne 29 reçoit des ordres permettant son ouverture ou sa fermeture. Les commandes sont transmises mécaniquement, hydrauliquement, pneumatiquement ou avantageusement électriquement. Avantageusement, comme illustré sur la figure 1, la vanne 29 est commandée par un calculateur 130. Le calculateur 130 est relié par exemple, d'une part à des capteurs 131 et d'autre part par une liaison 132 a par exemple d'autres calculateurs. Les capteurs 131 permettent par exemple d'acquérir les valeurs de la pression en divers points. Dans le cas d'utilisations aéronautiques, le calculateur 130 sera relié par la liaison 132 au calculateur principal qui lui indiquera la valeur de la pression extérieure à l'avion.

Le calculateur 130 comporte un programme de commande de la vanne 29 selon les critères de pression acquis par les capteurs 131 et reçus par le bus 132 et selon les commandes par exemple provenant du pilote de l'avion reçues sur la ligne 132.

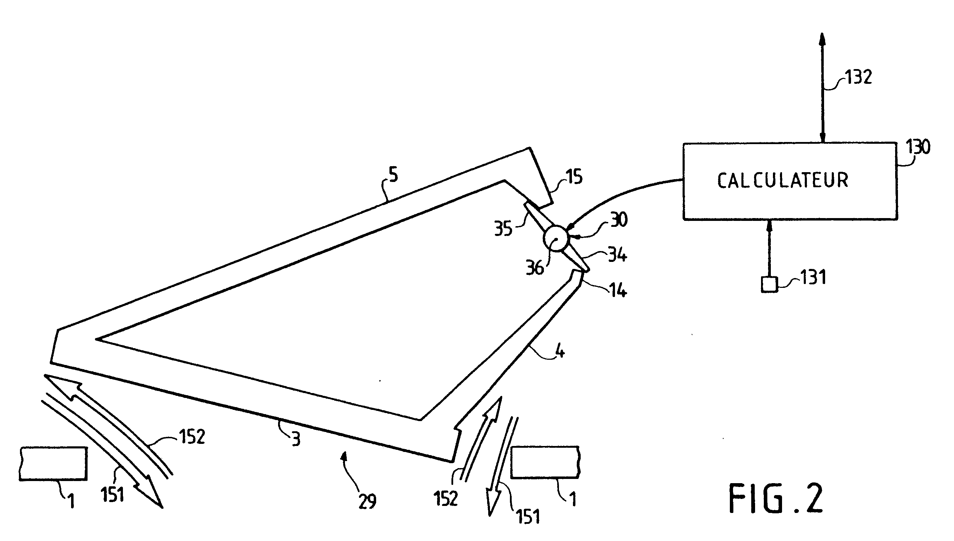

Sur la figure 2, on peut voir la vanne 29 selon la présente invention partiellement ouverte. L'ouverture a été obtenue par la rotation du moyen d'entraînement 30. Selon la surface découverte on obtient un écoulement de fluide entre les deux côtés de la vanne 29. Dans l'exemple illustré sur les figures, la vanne 29 s'ouvre vers l'intérieur. Dans un tel cas si la pression intérieure est supérieure à la pression extérieure, l'écoulement porte la référence 151. Dans le cas contraire, l'écoulement de fluide porte la référence 152 sur la figure 2.

La vanne 29 reste dans la position illustrée tant que les moyens 30 n'auront pas reçu du calculateur 130 une nouvelle commande assurant soit une ouverture plus grande soit la réduction de l'ouverture ou la fermeture complète de la vanne.

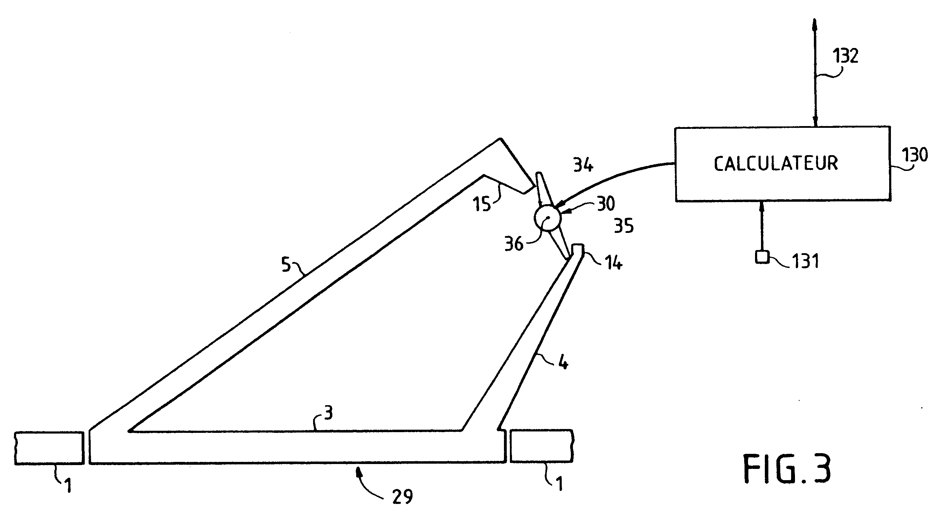

Il peut s'avérer nécessaire d'assurer une isolation hermétique par la vanne 29, et ce indépendamment des conditions de pression intérieures et extérieures. Par exemple, une vanne de ventilation d'un aéronef devra impérativement être fermée si elle se trouve en dessous de la ligne de flottaison dans le cas d'un amerrissage. Avantageusement, dans le cas du dispositif selon la présente invention, le blocage est obtenu par les moyens 30. Dans l'exemple de réalisation illustré sur la figure 3, les bras 34 qui normalement viennent appuyer sur l'extrémité 14 du montant 4 effectuent le blocage de la vanne 29 en appuyant sur l'extrémité 15 du montant 5. Pour ce faire les moyens 30 ont effectué une rotation autour de l'axe 36 dans le sens trigonométrique dans le cas de la figure jusqu'à obtenir tout d'abord la fermeture de la vanne 29 puis son blocage. Avantageusement, le bras 35 vient appuyer sur l'extrémité 14 du montant 4 pour plus de sécurité.

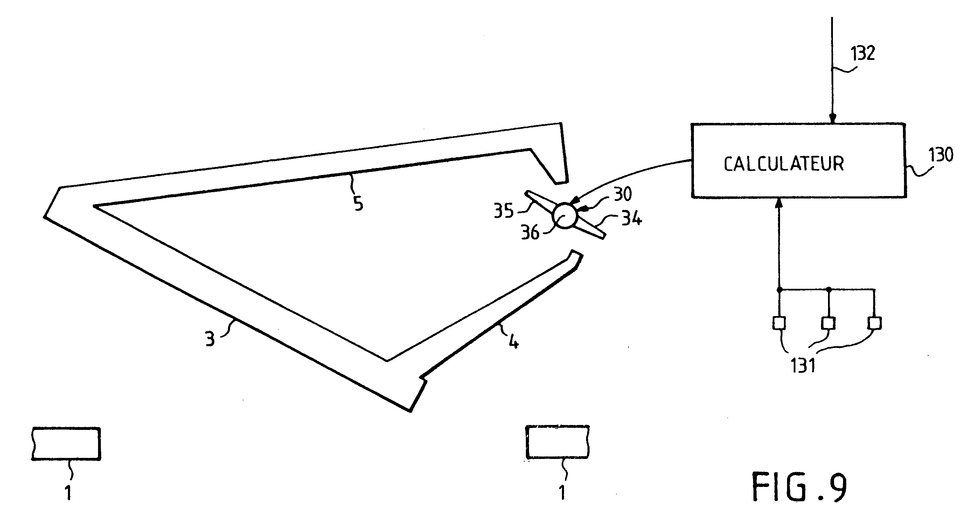

Sur la figure 9, on peut voir la vanne selon l'invention ouverte par la différence de pression. L'ouverture a été obtenue indépendamment du calculateur 130 et des bras 35 et 34 des moyens 30. Quelle que soit la position des bras 34 et 35 des moyens 30 pourvu qu'ils n'effectuent pas le verrouillage de la vanne en position fermée, la vanne s'ouvre automatiquement de façon autonome, même si par exemple, le calculateur 130 est en panne.

Sur la figure 4, on peut voir un vérin qui constitue avantageusement les moyens de positionnement 30. Les vérins comportent un moteur électrique 40, un actionneur 41 et un moyeu muni de deux bras 35 et 34. L'actionneur 41 comporte par exemple des engrenages permettant de réduire la vitesse de rotation. Dans l'exemple illustré sur la figure 4, les bras 34 et 35 ne sont pas placés symétriquement par rapport à un axe passant par le centre du moyeu.

Par contre, dans la variante de réalisation illustrée sur la figure 5, les bras 34 et 35 sont disposés symétriquement par rapport au moyeu 160.

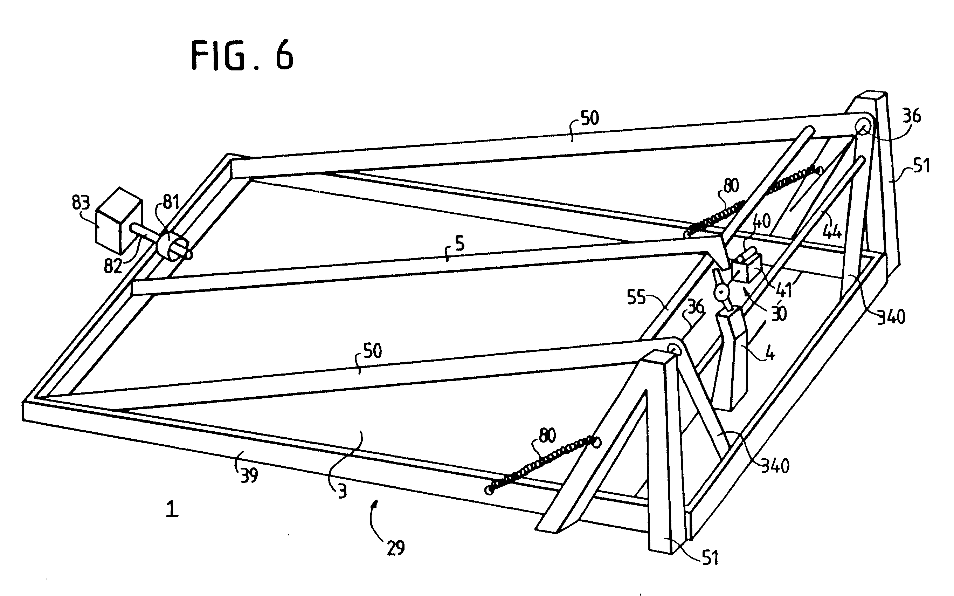

Sur la figure 6, on peut voir une vue en perspective d'un exemple de réalisation du dispositif selon la présente invention. Le volet 3 de la vanne 29 comporte un renforcement périphérique. Sur ce renforcement périphérique prennent appui en son centre les montants 4 et 5. Sur les côtés du renforcement périphérique du volet 3 se trouvent des montants 50 et 340 permettant la rotation autour d'un axe 36. Les montants 51 solidaires par exemple de la structure de l'avion soutiennent les axes 36. Avantageusement, les montants 5 et 50 sont reliés par une poutre transversale 55, de même les montants 340 et les montants 4 sont reliés par une poutre transversale 44.

En position normale, les moyens de positionnement 30, la vanne 29 est fermée de par son propre poids. Toutefois, il est possible de compléter la force qui referme la vanne 29 en disposant par exemple des ressorts 80 ou des aimants (non représentés). Ainsi, il est possible d'une part de pouvoir déterminer librement la masse de la vanne 29 et la surface du volet 3, et d'autre part de pouvoir disposer la vanne 29 dans une position quelconque par rapport à l'horizontale.

L'invention n'est pas limitée à l'utilisation de moyens de positionnement 30 pour assurer le verrouillage de la vanne 29. Par exemple on peut utiliser un verrou 18 fermé sur commande par une tige 82 déplacée par un actionneur 83.

L'invention n'est pas limitée à la réalisation de vannes "à pelle" telles qu'illustrées sur la figure 6.

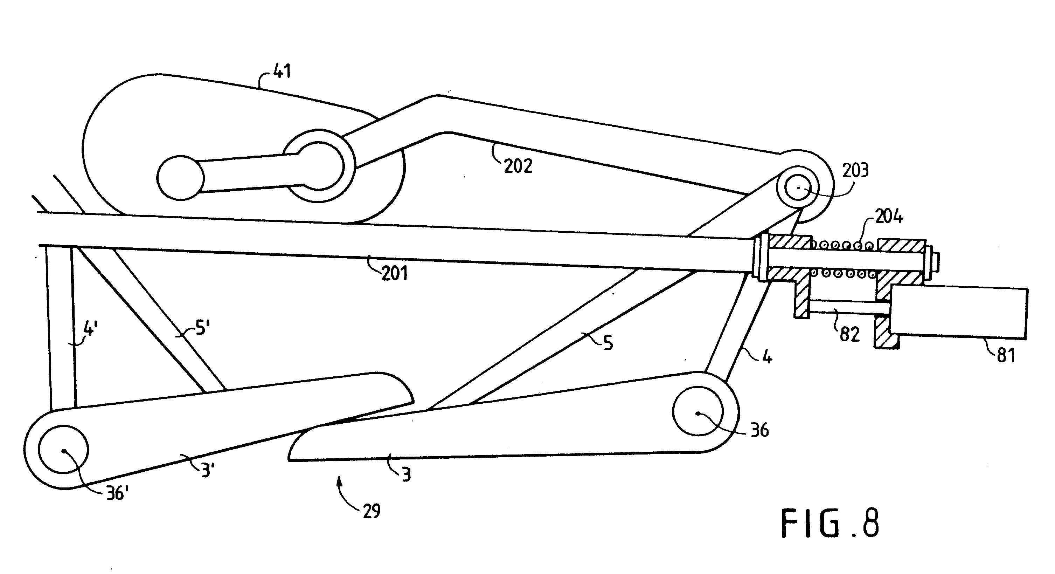

La réalisation de vannes "papillon" ou comme illustrées sur la figure 8 de vannes à deux volets à récupération de poussée ne sort pas du cadre de la présente invention.

La vanne de la figure 8 comporte un volet 3 dont l'ouverture, sur commande, est obtenue par un jeu de bielles 5,202 reliant le volet à un actionneur 41. L'actionneur 41 est susceptible d'être entraîné par un moteur, non représenté sur la figure. Dans l'exemple de la figure 8, l'ouverture s'effectue vers le bras par la rotation autour de l'axe 36.

La vanne 29 comprend un second volet 3'. Le volet 3' est entraîné par une bielle 201 reliées aux bielles 4,5,201 assurant l'ouverture du volet 3. Le volet 3 s'ouvre vers le haut de la figure 8.

L'originalité de la vanne 29 selon la présente invention par rapport à une vanne à récupération de pression de type connu réside dans le fait que la longueur de la bielle 201 peut varier sous l'action de la pression s'exerçant par exemple sur le volet 3'.

Dans l'exemple illustré sur la figure 8, la force provenant d'une différence de pression, si elle dépasse un seuil prédéterminé comprime un ressort 204, et permet l'ouverture du volet 3'. Le ressort 204 n'est comprimé que si la pression excède un seuil prédéterminé. Avantageusement, le ressort est complètement écrasé dès le franchissement du seuil de pression pour permettre une ouverture suffisante de la vanne à l'équilibrage de pression.

Dans une variante de réalisation, le ressort 204 est remplacé par une pièce mécanique prévue pour se rompre lorsque le seuil de pression a été atteint.

L'ouverture du volet 3' permet l'équilibrage de pression.

Le verrouillage de la vanne 29 est par exemple obtenu par l'utilisation d'un actionneur irréversible 81 faisant avancer une tige 82 qui en prenant appui sur un épaulement de la bielle 201 empêche la compression du ressort 204.

Il est bien entendu que d'autres moyens de verrouillage, comme par exemple un verrou rotatif empêchant l'ouverture des volets 3 et 3' ne sortent pas du cadre de la présente invention.

De même, une vanne dont le volet 3 ou dont les volets 3 et 3' sont susceptible de s'ouvrir sous l'action d'une différence de pression ne sort pas du cadre de la présente invention.

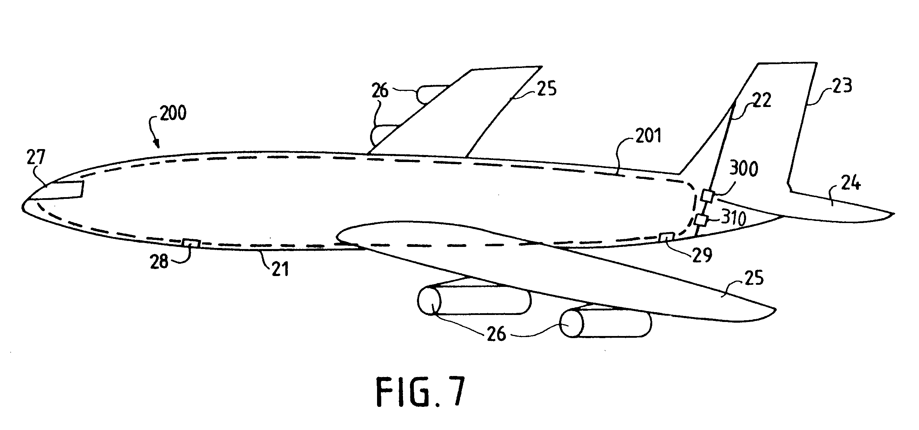

Sur la figure 7, on peut voir un aéronef 200 selon la présente invention. L'aéronef 200 comprend une enceinte pressurisée 201, deux ailes 25, par exemple quatre moteurs 26, un gouvernail vertical 23, deux empannages 24 et un cockpit 27.

L'enceinte pressurisée 201 est délimitée par la structure extérieure 21 de l'avion appelée peau et par une paroi arrière 22. La paroi arrière 22 est relativement fragile pour réduire la masse de l'avion.

Cette enceinte pressurisée doit comporter deux soupapes 300,310 de sécurité chargées de limiter en surpression et en dépression la différence de pression entre l'enceinte pressurisée et l'extérieur et ainsi d'éviter toute déformation de la structure de l'avion.

Cette différence de pression peut provenir en surpression d'une panne de régulation et en dépression d'un changement rapide d'altitude (descente urgente) par exemple.

Il est parfois nécessaire d'ajouter un élément supplémentaire aux deux soupapes de sécurité si celle-ci ne suffisent pas à assure les sécurités (pour des raisons d'encombrement, de place pour loger les soupapes). Dans les aéronefs de type connu, on ajoute alors un clapet de dépression qui permet de couvrir les cas de pannes d'une soupape et d'assurer avec les deux soupapes les conditions de sécurité normale.

L'avion 200 comporte en outre une vanne de régulation 28 et une vanne de ventilation 29. La vanne de régulation est prévue pour exécuter ce que l'on appelle "les séquences de vol" c'est-à-dire pour réguler la pression interne de façon à assurer le confort des passagers. La vanne de ventilation 29 permet un équilibrage complet des pressions lors de l'arrêt de l'avion. Il faut remarquer que les avions modernes comme par exemple l'avion de la série AIRBUS A300, A310, A320, A330 et A 340 comportent des volumes importants et ont des possibilités de manoeuvre avec changement d'altitude rapide. Ainsi, il est impératif de pouvoir effectuer les équilibrages de pression rapides pour empêcher d'endommager la structure de l'avion par une trop forte différence de pression. Or, le fait de placer un clapet de sécurité et de faire un trou sur la peau de l'avion présente des inconvénients graves. D'autre part, du fait des performances et le volume de l'avion, les soupapes de sécurité 30 et 31 risquent de s'avérer insuffisantes en cas d'incident. Ainsi, il est avantageux d'utiliser les vannes des figures 1,2,3 et 5 pour réaliser la vanne de régulation et/ou la vanne de ventilation pour assurer si cela s'avère nécessaire l'équilibrage de pression interne et externe.

Dans un exemple de réalisation, l'avion ne comporte pas de soupapes de sécurité 300 et 310, la ou les vannes 28 et/ou 29 assurant l'équilibrage de pression de sécurité.

Avantageusement, c'est la vanne de ventilation qui normalement durant le vol n'est pas active qui dans le cas d'une descente rapide de l'avion permettrait de façon autonome à l'air extérieur de rentrer à l'intérieur, pour réaliser un tel équilibre.

Avantageusement, on dispose les vannes 28 et 29 sur le ventre de l'avion, en dessous de la ligne de flottaison. Ainsi on facilite la maintenance qui peut se faire par le bas et d'autre part on facilite l'écoulement d'air de climatisation dont l'admission se situe dans la partie haute de l'avion. Ainsi il est impératif pour assurer la sécurité de l'avion en cas d'amerrissage de permettre le verrouillage en position fermée de la vanne 29. Le blocage est obtenu par le fonctionnement du commutateur marqué "ditching" sur le tableau de commande de l'avion.

Le dispositif selon la présente invention s'applique à tout dispositif de régulation de pression et/ou de débit entre une enceinte et l'extérieur ou entre deux enceintes comportant un dispositif d'équilibrage de sécurité.

L'invention s'applique notamment à la construction aéronautique, à la construction de raffineries de pétrole, de dispositifs de distribution de fluide et de réacteurs chimiques.

## Revendications

1. Vanne (29) comportant des moyens de positionnement (30) permettant son ouverture sur commande, caractérisée par le fait qu'elle comporte des moyens permettant son ouverture automatique dans le cas où la différence de pression sur ses deux faces dépasse un seuil.

2. Vanne (29) selon la revendication 1, caractérisée par le fait qu'elle comporte un axe de rotation (36) disposé en-dehors de l'axe de symétrie de la vanne.

3. Vanne (29) selon la revendication 1 ou 2, caractérisée par le fait que les moyens de positionnement comportent un vérin (30) assurant sur commande l'ouverture de la vanne (29).

4. Vanne selon la revendication 3, caractérisée par le fait qu'elle comporte des bras (4,5) permettant sous l'action du vérin (30) de faire tourner la vanne (29) d'un angle désiré autour de l'axe (36).

5. Vanne selon l'une quelconque des revendications précédentes, caractérisée par le fait qu'elle comporte des moyens élastiques (80) exerçant une force s'opposant à l'ouverture de la vanne (29).

6. Vanne selon l'une quelconque des revendications précédentes, caractérisée par le fait qu'elle comporte des moyens de verrouillage (30,80,81,82,83) de la vanne dans la position fermée.

7. Vanne (29) selon la revendication 6, caractérisée par le fait que le vérin (30) assure, sur commande, le verrouillage de la vanne (29).

8. Aéronef (200) caractérisé par le fait qu'il comporte au moins une vanne (29) selon l'une quelconque des revendications précédentes.

9. Aéronef (200) selon la revendication 8, caractérisé par le fait que la vanne (29) est une vanne de ventilation (29) destinée à équilibrer les pressions extérieures et intérieures lorsque l'aéronef (200) est posé au sol.

10. Aéronef (200) selon la revendication 8 ou 9, caractérisé par le fait que sous l'influence d'une pression extérieure trop importante, la vanne (29) s'ouvre vers l'intérieur de l'aéronef.

11. Vanne selon la revendication 1 ou 2, caractérisée par le fait que la vanne comporte deux volets (3,3') reliés par une bielle (201) comportant des moyens (204) permettant la variation de la longueur de la bielle sous l'action d'une différence de pression sur les deux faces de la vanne.

FIG.1

EP 0 343 020 A1

CALCULATEUR

FIG.2

EP 0 343 020 A1

FIG.3

# FIG.4

CALCULATEUR

130

132

131

40

41

30

35

36

160

34

# FIG.5

CALCULATEUR

130

132

131

40

41

30

35

36

160

34

FIG. 6

EP 0 343 020 A1

FIG.7

FIG.8

EP 0 343 020 A1

FIG.9

CALCULATEUR

EP 0 343 020 A1

Office européen
des brevets

**RAPPORT DE RECHERCHE EUROPEENNE**

Numero de la demande

EP 89 40 0986

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 029 290 (ANCHOR/DARLING VALVE CO.) <br> * Résumé * <br> --- | 1,3,6,7 | F 16 K 17/168 <br> F 16 K 17/04 <br> B 64 D 13/04 |
| X | FR-A-2 238 880 (VALVE SYSTEMS INT. INC.) <br> * Revendications 1,5 * <br> --- | 1 | |
| A | FR-A-2 244 953 (ACF INDUSTRIES INC.) <br> --- | | |
| A | FR-A-1 568 450 (UNITED AIRCRAFT CORP.) <br> ----- | | |

DOMAINES TECHNIQUES
RECHERCHES (Int. Cl.4)

F 16 K 17/00
F 16 K 24/00
F 16 K 15/00
B 64 D 13/00
B 64 C 1/00

Le présent rapport a été établi pour toutes les revendications

| Lieu de la recherche | Date d'achèvement de la recherche | Examinateur |
|---|---|---|
| LA HAYE | 25-07-1989 | DE SMET F.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)